# EUROPÄISCHE PATENTSCHRIFT

(11) **EP 0 485 751 B1**
(45) Veröffentlichungstag und Bekanntmachung des Hinweises auf die Patenterteilung: **19.01.1994**
(21) Anmeldenummer: 91117545.3
(22) Anmeldetag: 15.10.1991
(51) Int. Cl.: H02K 29/10, H02P 6/02, G01P 3/48

(54) **Verfahren zur Ermittlung der Drehzahl eines bürstenlosen Gleichstrommotors**
Method for the determination of the speed of a brushless d.c. motor
Procédé pour la détermination du nombre de tours d'un moteur à courant continu sans balais

(30) Priorität: 13.11.1990 DE 4036024
(43) Veröffentlichungstag der Anmeldung: 20.05.1992
(73) Patentinhaber: Heidelberger Druckmaschinen Aktiengesellschaft, D-69019 Heidelberg (DE)
(72) Erfinder: Blaser, Peter Theobald, W-6912 Dielheim (DE); Krüger, Michael, W-6803 Edingen-Neckarhausen (DE); Maass, Jürgen, W-6908 Wiesloch (DE); Meyer, Helmut, W-6940 Weinheim (DE)
(74) Vertreter: Stoltenberg, Heinz-Herbert Baldo

(56) Entgegenhaltungen:
- EP-A- 0 377 835
- DE-A- 3 325 610
- FR-A- 2 633 114
- FR-A- 2 633 114
- US-A- 4 228 396

## Beschreibung

Die Erfindung betrifft ein verfahren zur Ermittlung der Drehzahl und der Rotorlage eines bürstenlosen Gleichstrommotors, wobei am Rotor eine Signalspur vorgesehen ist, die von drei entsprechend zugeordneten Sensoren abgetastet wird, oder an dem Rotor drei Signalspuren vorgesehen sind, die von drei entsprechend zugeordneten Sensoren abgetastet werden.

Gleichstrommotoren werden in zunehmendem Maße in der Antriebstechnik eingesetzt, da sie sich durch eine hohe Dynamik und eine gute Steuerbarkeit auszeichnen. Bürstenlose, also elektronisch kommutierte Gleichstrommotoren bieten darüber hinaus den Vorteil, nahezu wartungsfrei zu arbeiten.

Bei bürstenlosen Gleichstrommotoren wird die Stellung des Rotors bezüglich der Phasenwicklungen des Stators über einen Rotorlagegeber ermittelt. Entsprechend den Stellungssignalen des Rotorlagegebers werden die Phasenwicklungen des Stators über schaltbare Halbleiterventile eines Zwischenkreis-Umrichters bestromt. Die Höhe des jeweils zugeführten Stroms richtet sich nach dem gewünschten Drehmoment des Motors. Üblicherweise ist deshalb der Drehzahlregelung eine Stromregelung unterlagert. Zur Bestimmung der Drehzahl des Motors wird eine zusätzliche Tachospur auf dem Rotor aufgebracht, die ebenso wie die zur Übertragung des Drehzahl-Istwertes notwendige Elektronik einen zusätzlichen Aufwand darstellt.

In der DE-OS 38 20 903 wird ein kollektorloser Gleichstrommotor beschrieben, dessen Rotor an der Stirnseite eine optisch erkennbare Signalspur zur Sensierung der Winkelstellung des Rotors trägt. Die Signalspur ist bei einem dreiphasigen Motor in drei radial angeordnete Einzelspuren unterteilt, die jeweils gleichmäßig über den Umfang verteilt drei reflektierende und drei absorbierende Zonen aufweisen, wobei die Zonen in den Einzelspuren um 60° elektrisch gegeneinander versetzt sind. Die Spuren werden von drei radial angeordneten Sensoren abgetastet, aus deren Ausgangssignalen die jeweilige Winkelstellung des Rotors zwecks Kommutierung ermittelt wird.

In dieser Offenlegungsschrift wird weiterhin vorgeschlagen, die Sensorsignale zur Drehzahlermittlung heranzuziehen. Hierzu werden die von dem Rotorlagegeber erzeugten 6 Impulse pro elektrischen Umlauf, also z. B. 18 Impulse pro Ankerumdrehung bei einem sechspoligen Motor, zusätzlich zur Drehzahlermittlung herangezogen. Diese 18 Impulse pro Ankerumdrehung sind jedoch für eine exakte Regelung des Motors, insbesondere im Bereich niederer Drehzahlen, unzureichend. Wird ein bürstenloser Gleichstrommotor zum Antrieb von Druckmaschinen verwendet, so muß eine exakte Drehzahlerfassung über den gesamten Drehzahlbereich gewährleistet sein, um ein einwandfreies Regelverhalten zu erreichen. Wie bereits zuvor erwähnt, stellt das Aufbringen einer zusätzlichen Tachospur auf den Rotor keine Alternative dar, da beim Bau kostengünstiger Antriebe jeglicher Mehraufwand vermieden werden sollte.

Der Erfindung liegt die Aufgabe zugrunde ein Verfahren zu schaffen, das es erlaubt, aus den Erkennungssignalen des Rotorlagegebers zusätzliche Informationen über den Motor zu erhalten.

Die Aufgabe wird dadurch gelöst, daß Signalspur(en) und Sensoren derart ausgebildet bzw. angeordnet sind, daß über eine logische Verknüpfung der beiden möglichen Signalzustände der drei Sensoren 2³ Werte realisiert werden und daß sechs dieser acht Werte zur Rotorlageerkennung und die verbleibenden beiden Werte 0 und 7 zur Drehzahlermittlung herangezogen werden.

Gemäß einer Weiterbildung des erfindungsgemäßen Verfahrens wird vorgeschlagen, daß die Werte 0 und 7 als gleichmäßige Pulsfolge während des Rotorumlaufs auftreten und daß die Drehzahlermittlung beispielsweise über eine Zählung der Pulse pro Zeit oder pro Zeitintervall oder über eine Pulsdauermessung erfolgt.

Diese Drehzahlinformation kann entweder ständig oder nur bei geringen Drehzahlen ausgewertet werden. Ist eine Auswertung im höheren Drehzahlbereich nicht notwendig, so kann gemäß einer vorteilhaften Weiterbildung des erfindungsgemäßen Verfahrens mit einer geeigneten Signalverzögerung die Drehzahlinformation ausgeblendet und auf eine normale Kommutierung übergegangen werden.

Gemäß dem erfindungsgemäßen Verfahren beginnt das Anlaufen des Motors entweder mit einem eindeutigen Zustand oder es liegt ein mehrdeutiger Zustand - charakterisiert durch die Werte 0 oder 7 - vor, die sich periodisch während eines Rotorumlaufs wiederholen. Um den Motor zu starten, wird bei Vorliegen eines undefinierten Zustandes des Motors ersatzweise ein Zustand eingeschaltet, der eine Vor- oder Rückdrehung des Motors ermöglicht. Der Rotor läuft um ein Teilsegment weiter bis eine definierte Stellung des Rotors erreicht wird. Die Größe dieses Teilsegmentes richtet sich nach der Anzahl der Werte 0 und 7 innerhalb eines Segments.

Eine vorteilhafte Weiterbildung des erfindungsgemäßen Verfahrens sieht vor, von den drei Sensorsignalen zwei Sensorsignale mit gleichem Zustand auszuwählen und eine Rotorlageerkennung erst durchzuführen, wenn eines der beiden Sensorsignale seinen Signalzustand ändert, d. h., für die exakte Arbeitsweise des Verfahrens genügt die Überwachung der Signalzustände zweier Sensoren.

Eine gleichwertige Lösung zur gestellten Aufgabe - ein Verfahren zu schaffen, das es erlaubt aus den Erkennungssignalen eines Rotorlagegebers zusätzliche Informationen über die Drehzahl des Motors zu ziehen - stellt folgendes Verfahren dar:
Die Signalspur(en) und die Sensoren sind derart ausgebildet bzw. angeordnet, daß durch eine logische Verknüpfung der beiden jeweils möglichen Signalzustände der Sensoren 2³ Werte realisiert werden und daß die Kombination zweier aufeinander folgender Werte zur Rotorlageerkennung und die Anzahl der Änderungen der Werte während eines Rotorumlaufs zur Drehzahlermittlung herangezogen werden.

Die Erfindung wird anhand der nachfolgenden Zeichnungen näher erläutert.

Es zeigen:
- Fig. 1: eine schematische Darstellung eines Rotors eines Gleichstrommotors mit einer modifizierten Signalspur zur Durchführung einer Ausführungsform des erfindungsgemäßen Verfahrens,
- Fig. 2: eine schematische Darstellung eines Rotors eines Gleichstrommotors mit modifizierten Signalspuren zur Durchführung einer Ausführungsform des erfindungsgemäßen Verfahrens,
- Fig. 3: Sensorsignale A, B, C während eines vollständigen Zyklus' der Beaufschlagungen der Phasenwicklungen (360° elektrisch),
- Fig. 4: Verknüpfungstabelle der Sensorsignale A, B, C in den einzelnen Teilsegmenten I bis VI gemäß Fig. 3,
- Fig. 5: Sensorsignale A, B, C der drei Sensoren über einen vollständigen Zyklus' der Beaufschlagungen der Phasenwicklungen (360° elektrisch) gemäß einer weiteren Ausführungsform des erfindungsgemäßen Verfahrens,
- Fig. 6: Verknüpfungstabelle der Sensorsignale A, B, C in den einzelnen Teilsegmenten I bis VI gemäß Fig. 5.

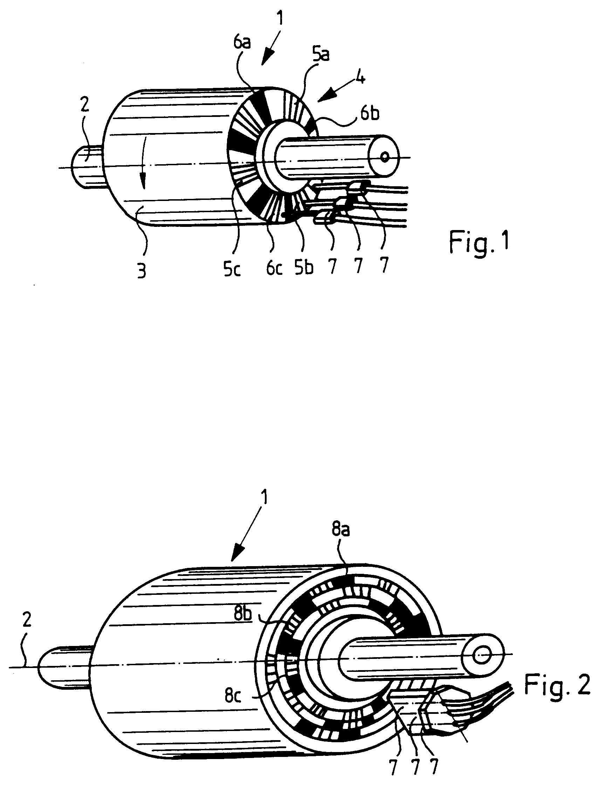

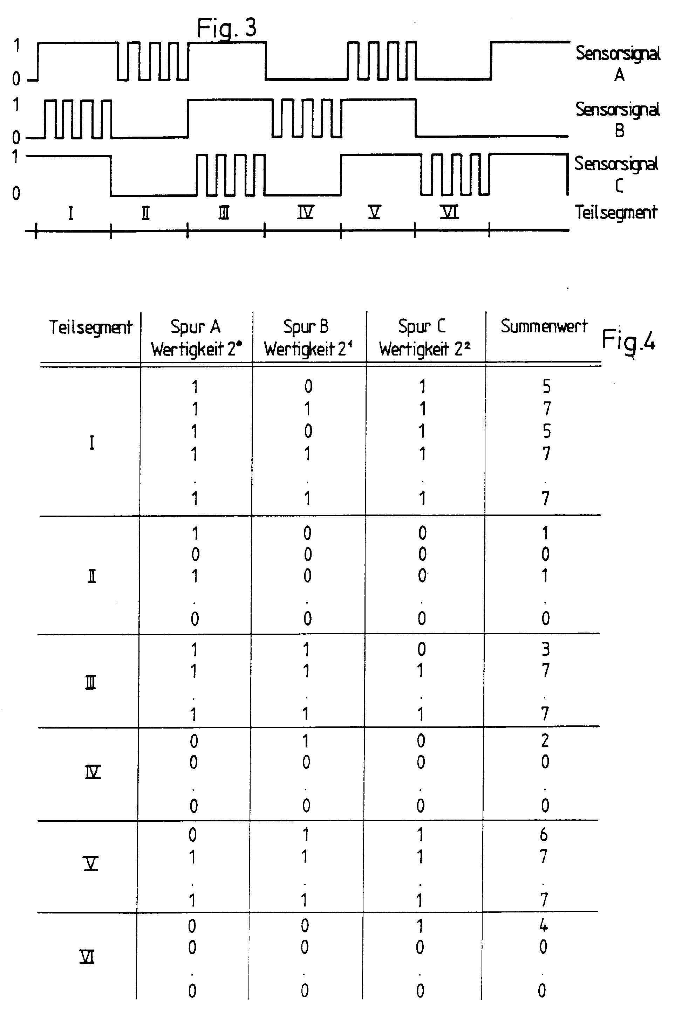

Fig. 1 zeigt den Rotor 1 eines nicht dargestellten bürstenlosen Gleichstrommotors. Auf einer Welle 2 trägt der Rotor 1 mehrere Permanentmagnete 3. Diese Permanentmagnete 3 sind mit wechselnder Polung und radialer Magnetisierungsrichtung derart auf der Welle 2 angeordnet, daß ein Rotor mit drei Polpaaren gebildet wird. Auf einer Stirnfläche des Rotors 1 ist eine Signalspur 4 aufgebracht, die in reflektierende Segmente 5a, 5b, 5c und in absorbierende Segmente 6a, 6b, 6c aufgeteilt ist. Die Signalspur 4 wird von drei entsprechend zugeordneten Sensoreinrichtungen 7 abgetastet. Entsprechend dem erfindungsgemäßen Verfahren ist die Signalspur 4 derart modifiziert, daß ihre Abtastung die Sensorsignale A, B, C nach Fig. 3 liefert.

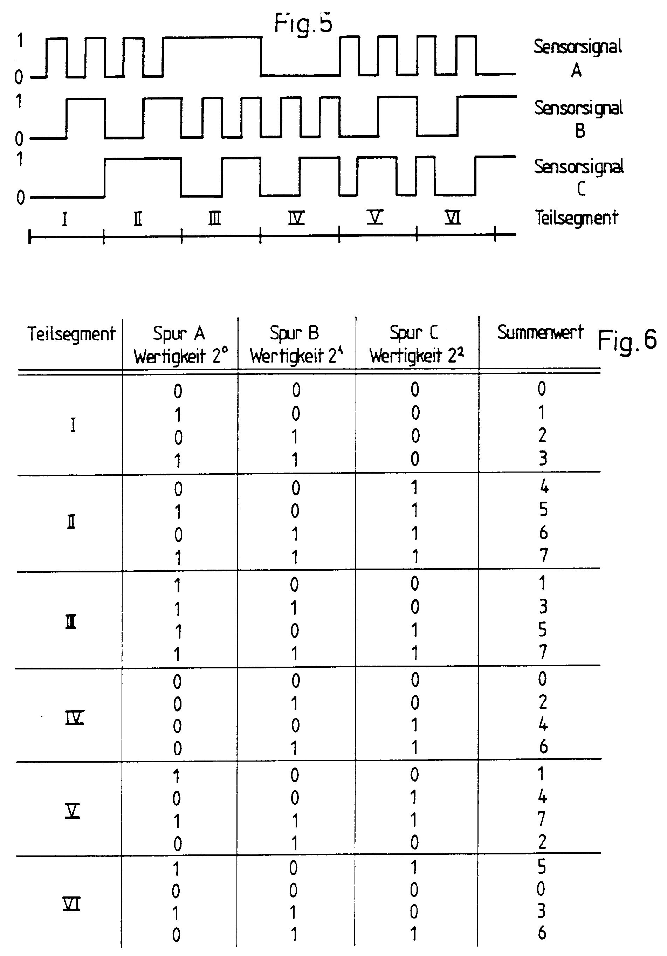

In Fig. 2 ist eine weitere Anordnung zur Durchführung des erfindungsgemäßen Verfahrens dargestellt. Auch hier sind auf der Stirnseite eines über eine Welle 2 drehenden Rotors 1 drei Signalspuren 8a, 8b, 8c aufgebracht. Diese drei Signalspuren 8a, 8b, 8c werden von entsprechend radial angeordneten Sensoreinrichtungen 7 optisch abgetastet. Bei entsprechender Modifizierung der Signalspuren 8a, 8b, 8c liefern die Sensoreinrichtungen 7 beispielsweise Sensorsignale A, B, C gemäß Fig. 3 oder aber gemäß Fig. 5, wobei die in Fig. 3 und Fig. 5 gezeigten Signalverläufe zur Drehzahlermittlung für die beiden gleichwertigen Ausführungsformen des erfindungsgemäßen Verfahrens verwendbar sind.

Eine Durchführung des erfindungsgemäßen Verfahrens entsprechend den beiden beanspruchten Ausführungsformen ist selbstverständlich nicht auf die beiden Anordnungen, wie sie in Fig. 1 bzw. Fig. 2 gezeigt sind, beschränkt. Vielmehr können die Signalspuren beispielsweise auch ohne weiteres auf der Mantelfläche des Rotors 1 angeordnet sein und von entsprechend zugeordneten Sensoreinrichtungen abgetastet werden, wobei eine geeignete Verknüpfung der Abtastsignale auch hier zur Drehzahlermittlung verwendbar ist. Darüber hinaus lassen sich die zur Durchführung des erfindungsgemäßen Verfahrens nötigen Signalzustände der Sensoren auch über anders geartete Signalspuren und Signalgeber als die hier dargestellten realisieren.

Fig. 3 zeigt die Sensorsignale A, B, C, die von den drei Sensoreinrichtungen 7 während eines elektrischen Umlaufs, der einer mechanischen Drehung des Rotors um 120° entspricht, erzeugt werden. Die unmodifizierten Signale werden in bekannter Weise zur Bestimmung der Rotorlage und damit zur Kommutierung herangezogen. Eine Steuerlogik ordnet beispielsweise den drei Sensorsignalen 101 eindeutig das Teilsegment I zu und veranlaßt die Bestromung der entsprechenden beiden Phasenwicklungen, solange diese Signalfolge auftritt. Ändert sich das Kommutierungssignal auf 100 - befindet sich der Rotor 1 also im Teilsegment II - veranlaßt die Steuerlogik eine Weiterschaltung der Kommutierung durch Bestromung der hierzu gehörigen Phasenwicklungen.

Entsprechend der in Fig. 3 gezeigten Modifikation der Sensorsignale A, B, C wird innerhalb eines Kommutierungssignals eine Impulsfolge von 01 bzw. 10 Signalen erzeugt. Neben den Kommutierungssignalen zur Bestimmung der Rotorlage treten hierdurch in den einzelnen Teilsegmenten I bis VI periodisch die binären Werte 111 bzw. 000 auf. Die Anzahl der Pulse 111 bzw. 000 innerhalb der für die Fortschaltung der Kommutierung bekannten Signalzustände der Teilsegmente, wird zur Drehzahlermittlung herangezogen. Durch eine EXNOR-Verknüpfung der drei Sensorsignale wird eine gleichmäßige Pulsfolge von 0 und 1 Zuständen erzeugt. Aus der Anzahl der Zustandsänderungen pro Zeiteinheit läßt sich die Drehzahl des Motors in einfacher Weise bestimmen. Über die Anzahl der 01 bzw. 10 Pulse innerhalb eines Teilsegments läßt sich die Anzahl der auftretenden Pulse pro Umdrehung in weitem Rahmen variieren, d. h., dieses Verfahren ermöglicht eine Drehzahlermittlung mit beliebig hoher Auflösung.

Wie Fig. 4 zu entnehmen ist, beginnt der Anlauf des Motors entweder mit einem eindeutigem Zustand, der durch die Summenwerte 1 bis 6 charakterisiert ist, oder es liegt ein mehrdeutiger Zustand vor, der durch die Summenwerte 0 oder 7 gekennzeichnet ist. Wenn kein eindeutiger Zustand vorliegt um den Motor zu starten, wird ersatzweise ein Zustand eingeschaltet, der eine Vor- oder Rückdrehung des Motors ermöglicht. Der Rotor 1 läuft maximal um ein Teilsegment weiter, bis eine definierte Stellung erreicht ist, d. h., spätestens nach einer undefinierten Drehung um ein Teilsegment ist eine eindeutige Lagebewertung des Rotors möglich.

Eine Ausblendung der für die Wicklungsfortschaltung störenden Zustände, gekennzeichnet durch die Summenwerte 0 bzw. 7, läßt sich durch folgendes Verfahren ausschalten: da zwei von drei Sensorsignalen für eine einwandfrei arbeitende Stellungsbewertung des Rotors ausreichend sind, wählt eine in den Zeichnungen nicht dargestellte Steuerlogik zwei Sensorsignale mit gleicher Wertigkeit aus. Zeigt beispielsweise sowohl das Sensorsignale A als auch das Sensorsignal B die Wertigkeit 1, so ist hierdurch eindeutig das Teilsegment I gekennzeichnet. Ebenso ist durch die Wertigkeit 0 der Sensorsignale B und C eindeutig das Teilsegment II charakterisiert. Für die Rotorlageerkennung prüft die Steuerlogik also, ob zwei gleiche Zustände an den drei vorhandenen Spuren vorliegen und ignoriert die dritte Spur solange, bis diese zwei Spuren ungleiche Pegel annehmen. Tritt dieser Fall auf, so bedeutet das eindeutig, daß das nächste Segment erreicht ist und die Stellungsbewertung von neuem vorgenommen werden kann.

Die zusätzliche Drehzahlinformation, die aus der gleichmäßig über den Rotorumlauf auftretenden Pulsfolge gewonnen wird, kann entweder ständig oder nur bei geringen Drehgeschwindigkeiten ausgewertet werden. Ist eine Auswertung bei höheren Geschwindigkeiten nicht notwendig, so läßt sich diese Drehzahlinformation mit einer Signalverzögerung ausblenden und es kann auf eine normale Motorkommutierung übergegangen werden.

In Fig. 5 ist eine weitere Ausführungsform des erfindungsgemäßen Verfahrens dargestellt. Die Sensorsignale A, B, C variieren entsprechend Fig. 5 über die Teilsegmente I bis VI, die einer elektrischen Umdrehung des Rotors entsprechen, zwischen den beiden Zuständen 1 und 0. Die Summenbildung dieser Sensorsignale liefert Werte, wobei die Kombination zweier aufeinanderfolgender Werte - wie der Funktionstabelle in Fig. 6 zu entnehmen ist - eine eindeutige Aussage darüber erlaubt, in welchem Teilsegment der Rotor 1 steht. So tritt beispielsweise die Aufeinanderfolge der Werte 0 und 1 nur im Teilsegment I auf. Durch Mitverwendung der üblicherweise für die Kommutierung nicht notwendigen Summenwerte 0 und 7, lassen sich hierdurch bei einem sechspoligen Motor pro elektrischer Umdrehung des Rotors 3 x 8 Drehzahlinformationen erhalten. Zusätzlich liefert dieses Verfahren Informationen über die Drehrichtung. Während die Kombination zweier aufeinanderfolgender Summenwerte der Sensorsignale A, B, C also eine eindeutige Kommutierungsbewertung erlaubt, wird die Anzahl der Änderungen der Summenwerte zur Drehzahlermittlung herangezogen, d. h., jede Änderung des Summenwertes wird von einer Steuerlogik registriert und zu den 72 Änderungssignalen pro mechanischer Umdrehung des Rotors aufsummiert.

Ebenso wie beim ersten vorgestellten Verfahren, ist auch beim Start des Motors gemäß diesem zweiten Verfahren keine eindeutige Lagebewertung des Rotors möglich. Die vorliegende Wertigkeit des Rotorlagegebers ist dreideutig. Deshalb wird wie beim ersten Steuerverfahren ein Zustand eingeschaltet, der eine Vor- oder Rückdrehung des Rotors ermöglicht. Nach einer Drehung um 1/4 des Teilsegmentes stellt sich hier jedoch bereits ein anderer Summenwert ein, d. h., nach einer Drehung um 1/4 des Teilsegmentes läßt sich zusammen mit dem Vorzustand eindeutig die absolute Position des Rotors ermitteln.

Diese Verfahren lassen sich auch auf Motoren mit anderer Pohlzahl übertragen.

## Patentansprüche

1. Verfahren zur Ermittlung der Drehzahl und der Rotorlage eines eines dreiphasigen bürstenlosen Gleichstrommotors, wobei am Rotor eine Signalspur vorgesehen ist, die von drei entsprechend zugeordneten Sensoren abgetastet wird, oder an dem Rotor drei Signalspuren vorgesehen sind, die von drei entsprechend zugeordneten Sensoren abgetastet werden,
**dadurch gekennzeichnet**,
daß die Signalspur bzw.-spuren und die Sensoren derart ausgebildet bzw. angeordnet sind, daß durch eine logische Verknüpfung der beiden jeweils möglichen Signalzustände der Sensoren 2³ Werte realisiert werden, und
daß sechs dieser acht Werte zur Rotorlageerkennung und die verbleibenden beiden Werte 0 und 7 zur Drehzahlermittlung herangezogen werden.

2. Verfahren nach Anspruch 1,
**dadurch gekennzeichnet**,
- daß die Werte 0 und 7 als gleichmäßige Pulsfolge während eines Rotorumlaufs auftreten und
- daß die Drehzahlermittlung über die Zählung der Pulse pro Zeit für einen Rotorumlauf erfolgt.

3. Verfahren nach Anspruch 1 oder 2,
**dadurch gekennzeichnet**,
daß die Werte 0 und 7 im oberen Drehzahlbereich ausgeblendet werden.

4. Verfahren nach Anspruch 1 oder 2,
**dadurch gekennzeichnet**,
- daß von den drei Sensorsignalen zwei Sensorsignale mit gleichem Signalzustand ausgewählt werden und
- daß eine Rotorlageerkennung durchgeführt wird, wenn eines der beiden Sensorsignale seinen Signalzustand ändert.

5. Verfahren zur Ermittlung der Drehzahl und der Rotorlage eines dreiphasigen bürstenlosen Gleichstrommotors, wobei an einem Rotor eine Signalspur vorgesehen ist, die von drei entsprechend zugeordneten Sensoren abgetastet wird, oder wobei an einem Rotor drei Signalspuren vorgesehen sind, die von drei entsprechend zugeordneten Sensoren abgetastet werden,
**dadurch gekennzeichnet,**
daß die Signalspur bzw. -spuren und die Sensoren derart ausgebildet bzw. angeordnet sind, daß durch eine logische Verknüpfung der beiden jeweils möglichen Signalzustände der Sensoren 23 Werte realisiert werden, und
daß die Kombination zweier aufeinanderfolgender Werte zur Rotorlageerkennung und die Anzahl der Änderungen der Werte während der Zeit für einen Rotorumlauf zur Drehzahlermittlung herangezogen werden.

## Claims

1. Method for determining the speed of revolution and the rotor position of a three-phase brushless DC motor, one signal track being provided on the rotor and being sensed by three correspondingly assigned sensors, or three signal tracks being provided on the rotor and being sensed by three correspondingly assigned sensors, characterised in that the signal track or tracks and the sensors are constructed and arranged, respectively, in such a way that 2³ values are realised by means of a logical connection of the two signal states possible in each case of the sensors, and in that six of these eight values are used for detection of the rotor position and the remaining two values 0 and 7 are used to determine the speed of revolution.

2. Method according to Claim 1, characterised
- in that the values 0 and 7 occur as a uniform pulse sequence during a rotation of the rotor and
- in that the speed of revolution is determined by means of counting the pulses per time for one rotation of the rotor.

3. Method according to Claim 1 or 2, characterised in that the values 0 and 7 are blanked out in the upper range of the speed of revolution.

4. Method according to Claim 1 or 2, characterised
- in that two sensor signals with the same signal state are selected from the three sensor signals and
- in that a detection of the rotor position is carried out if one of the two sensor signals changes its signal state.

5. Method for determining the speed of revolution and the rotor position of a three-phase brushless DC motor, one signal track being provided on a rotor and being sensed by three correspondingly assigned sensors, or three signal tracks being provided on a rotor and being sensed by three correspondingly assigned sensors, characterised in that the signal track or tracks and the sensors are constructed and arranged, respectively, in such a way that 2³ values are realised by means of a logical connection of the two signal states possible in each case, of the sensors and in that the combination of two successive values is used for the detection of the rotor position and the number of changes in the values during the time for one rotation of the rotor is used in order to determine the speed of revolution.

## Revendications

1. Procédé destiné à déterminer la vitesse de rotation et la position du rotor d'un moteur à courant continu triphasé, sans balais, une piste de signalisation, balayée par trois capteurs affectés en conséquence, étant prévue sur le moteur ou trois pistes de signalisation qui sont balayées par trois capteurs affectés en conséquence étant prévues sur le rotor, caractérisé en ce que la ou les piste(s) de signalisation et les capteurs sont respectivement conçus et disposés de manière que par une relation logique entre les deux états de signalisation possibles des capteurs il soit réalisé 2³ valeurs et en ce que six de ces huit valeurs soient utilisées pour détecter la position du rotor et les deux valeurs 0 et 7 restantes soient utilisées pour déterminer la vitesse de rotation.

2. Procédé selon la revendication 1, caractérisé en ce que
- les valeurs 0 et 7 apparaissent sous la forme d'une séquence pulsée régulière pendant une rotation du rotor et
- en ce que la détermination de la vitesse de rotation s'effectue par le comptage des impulsions par unité de temps pendant le temps d'une rotation du rotor.

3. Procédé selon les revendications 1 ou 2, caractérisé en ce que les valeurs 0 et 7 sont supprimées dans la gamme des vitesses de rotation supérieures.

4. Procédé selon les revendications 1 ou 2, caractérisé en ce que
- parmi les trois signaux des capteurs deux signaux avec le même état de signalisation sont sélectionnés et
- en ce qu'une détection de la position du rotor est réalisée lorsque l'un des deux signaux des capteurs modifie son état de signalisation.

5. Procédé destiné à déterminer la vitesse de rotation et la position du rotor d'un moteur à courant continu triphasé, sans balais, dans lequel il est prévu sur un rotor une piste de signalisation qui est balayée par trois capteurs affectés en conséquence, ou dans lequel sur un rotor il est prévu trois pistes de signalisation qui sont balayées par trois capteurs affectés en conséquence, caractérisé en ce que la ou les piste(s) de signalisation et les capteurs sont respectivement conçus et disposés de manière que par une relation logique entre les deux états de signalisation possibles des capteurs il soit réalisé 2³ valeurs et que la combinaison de deux valeurs successives soit utilisée pour la détection de la position du rotor et que le nombre des variations des valeurs pendant le temps d'une rotation du rotor soit utilisé pour déterminer la vitesse de rotation.
